# EUROPÄISCHE PATENTSCHRIFT

(11) **EP 2 818 786 B1**
(45) Veröffentlichungstag und Bekanntmachung des Hinweises auf die Patenterteilung: **20.06.2018**
(21) Anmeldenummer: 14167873.0
(22) Anmeldetag: 12.05.2014
(51) Int. Cl.: F16P 3/08

(54) **Maschinenschutzeinrichtung**
Machine protection device
Dispositif de protection de machine

(30) Priorität: 25.06.2013 DE 102013212125
(43) Veröffentlichungstag der Anmeldung: 31.12.2014
(73) Patentinhaber: Krones AG, 93073 Neutraubling (DE)
(72) Erfinder: Stoiber, Christian, 93073 Neutraubling (DE); Scheibenpflug, Robert, 93073 Neutraubling (DE)
(74) Vertreter: Grünecker Patent- und Rechtsanwälte PartG mbB

(56) Entgegenhaltungen:
- GB-A- 492 091
- GB-A- 596 497
- GB-A- 1 531 971
- GB-A- 2 176 236

## Beschreibung

Die vorliegende Erfindung betrifft im allgemeinen einen Schutzmechanismus für eine Maschine wie er beispielsweise in den Patentschriften GB 1 531 971, GB 492 091 und GB 596 497 beschrieben wird. Beispielsweise betrifft GB 1 531 971 Textilmaschinen, bei denen das Gehäuse einer Antriebseinheit nur geöffnet werden kann, wenn ein Bügel, der die Gehäusetüren sichert, weggeklappt wird und dabei einen Schalter betätigt. In der GB 492 091 wird ein ähnlicher Mechanismus für eine Teigknetmaschine verwendet, wobei ein Bügel das Öffnen von Türen verhindert, um den Zugang zu Teigknetwalzen zu schützen. Beim Öffnen des Bügels wird ein Schalter betätigt. Die GB 596 497 betrifft einen Schutzmechanismus für eine Standbohrmaschine, die verhindert, dass die Bohrmaschine betrieben werden kann, wenn der Schutzmechanismus geöffnet ist. Insbesondere betrifft die vorliegende Erfindung eine Etikettiervorrichtung bzw. ein Kaltleimaggregat mit einem Schutzmechanismus zur Überwachung und Sicherung der Position von Türen und/oder positionierbare Maschinenteile, um eine Kollision von Objekten und/oder Personen mit sich bewegenden oder drehenden Maschinenteile zu verhindern.

Maschinen zur Handhabung von Objekten, beispielsweise Behälter oder Flaschen enthalten sich schnell drehende bzw. bewegenden Komponenten, die vor Berührung geschützt werden müssen, um Fehlfunktionen, Unfälle und Verletzung von Personen zu vermeiden. Üblicherweise sind solche Maschinen mit einer Einhausung versehen, die auch einen Schutz vor Kollisionen darstellen. Da solche Maschinen aber gewartet werden müssen, gibt es verschließbare Öffnungen bzw. Zugänge ins Gehäuse, die ein Sicherheitsrisiko darstellen. Üblicherweise werden die Zugänge jeweils einzeln durch geeignete Sensorik überwacht und durch einen Verriegelungsmechanismus verriegelt, die sicherstellen, dass das Gehäuse nur dann geöffnet werden kann, wenn die Maschine außer Betrieb ist. Alternativ kann die Sensorik auch veranlassen, dass die Maschine zum Stillstand kommt, wenn das Gehäuse geöffnet wird. Üblicherweise weisen solche Maschinen mehrere Öffnungen bzw. Türen auf, die alle überwacht werden müssen, um einen sicheren Betrieb zu gewährleisten.

Beispielsweise zeigt die europäische Patentanmeldung EP-A-2345835 eine Verriegelungsvorrichtung und Sicherungseinrichtung für einen Arbeitsbereich einer Maschine.

Insbesondere zeigt dieser Stand der Technik zwei schwenkbare Klappen oder Türen in einem Rahmen oder einem Gehäuse, die als bewegliche Schutzeinrichtung für beispielsweise eine Flaschenbehandlung- und Verarbeitungsanlage wie beispielsweise eine Etikettiereinrichtung zum Aufbringen von Etiketten auf Flaschen oder Behältern dienen, um einen Zugang zur Maschine bei Wartungs-, Reinigungs- oder Instandhaltungsarbeiten zu ermöglichen. Um die Sicherheit zu gewährleisten weist jede Tür einen Verriegelungsmechanismus und eine Überwachungseinrichtung auf. Die Überwachungseinrichtung sorgt dafür, dass die sich bewegenden Teile der Maschine gestoppt werden, wenn sich die Tür öffnet. Der Verriegelungsmechanismus sorgt dafür, dass das mechanische Entriegeln der Tür so langsam erfolgt, dass die Maschine steht, wenn die Tür offen ist. Durch die zeitliche Verzögerung beim manuellen Öffnen der Tür ist es möglich, die sich drehenden bzw. sich bewegenden Maschinenteile auf schonende Weise und damit verschleißarm zum Stillstand zu bringen.

Ein Nachteil dieser Schutzvorrichtungen ist, dass jede Schutztür mit einem separaten Verriegelungsschalter und der dazu nötigen Elektronik versehen werden muss, wodurch sich der Aufwand an mechanischen und elektronischen Bauteilen sowie Verkabelung erhöht.

Es ist deshalb eine allgemeine Aufgabe vorliegender Erfindung eine Schutzeinrichtung für Maschinen mit mehreren Türen mit geringem mechanischem und elektrischen Aufwand bereitzustellen, der wirkungsvoll eine Berührung von sich drehenden und sich bewegenden Maschinenteilen verhindert und ein schonendes Abstoppen der sich bewegenden Teile ermöglicht.

Im Speziellen besteht die Aufgabe der vorliegenden Erfindung darin, einen Schutzmechanismus für ein Kaltleimaggregat bereitzustellen, der neben der Position von Türen zusätzlich die Position eines höhenverstellbaren Antriebsmotors für eine Leimwalze überwacht und sichert.

Die allgemeine Aufgabe der vorliegenden Erfindung wird mit dem Gegenstand des Anspruches 1 erreicht. Insbesondere wird die Aufgabe erreicht durch einen Schutzmechanismus für eine Maschine zur Überwachung und Sicherung der Position von mehreren Türen und/oder positionierbaren Maschinenteilen. Der Schutzmechanismus ist gekennzeichnet durch einen relativ zu den Türen und zu den positionierbaren Maschinenteilen beweglich gelagerten zentralen Schutzbügel, der so ausgebildet ist, dass er nur dann geschlossen werden kann, wenn alle Türen geschlossen sind und sich alle Maschinenteile in einer Betriebsposition befinden. Weiterhin ist der Schutzmechanismus gekennzeichnet durch einen zentralen Schutzschalter, der die Position des zentralen Schutzbügels überwacht. Somit muss nicht jede einzelne Tür durch einen eigenen Schutzschalter und einen eigenen Verriegelungsmechanismus gesichert und überwacht werden. Weiterhin muss der zentrale Schutzbügel entsprechend groß ausgebildet werden, um alle Türen abzudecken, so dass eine Betätigung des Schutzbügels ein bis zwei Sekunden Zeit in Anspruch nimmt, die ausreichen, die sich bewegenden Maschinenteile auf schonende Weise abzustoppen, bevor die Türen geöffnet und die positionierbaren Maschinenteile bewegt werden können.

Unter Türen im Sinne der Ansprüche 1 bis 15 werden schwenkbare Klappen verstanden, die einen Zugang zu sicherheitsrelevanten Bereichen der Maschine erlauben, die ein Unfall- bzw. Verletzungsrisiko aufgrund von sich schnell drehenden oder bewegenden Maschinenteilen bergen.

In einer Ausführungsform ist der zentrale Schutzbügel so ausgeführt, dass er zwei Endlagen für die Maschinenzustände offen und geschlossen einnehmen kann. Um die Betriebssicherheit zu erhöhen und die Handhabung zu erleichtern, kann der zentrale Schutzbügel mit einer Gasfeder in den beiden Endlagen fixiert werden.

In einer Ausführungsform ist der zentrale Schutzbügel so ausgeführt, dass er bei einer offenen Tür blockiert wird und nicht in die geschlossene Endlage gebracht werden kann. Dadurch wird verhindert, dass der zentrale Schutzschalter, der die Position des zentralen Schutzbügels überwacht, einen geschlossenen, d.h. betriebsbereiten Zustand meldet, obwohl noch eine Tür geöffnet ist.

In einer Ausführungsform ist der zentrale Schutzbügel so ausgeführt, dass die Türen blockiert sind, wenn sich der zentrale Schutzbügel in der geschlossenen Endlage befindet. d.h., solange der zentrale Schutzschalter eine geschlossene, d.h. betriebsbereite Position anzeigt, ist es nicht möglich, eine Tür zu öffnen.

In einer anderen Ausführungsform ist der zentrale Schutzschalter so ausgebildet, dass er den Betrieb der Maschine zulässt, wenn er von einem Betätigungselement für den zentralen Schutzschalter betätigt wird und dass er den Maschinenbetrieb bei nicht Betätigung blockiert. Diese Sicherheitsmaßnahme sorgt dafür, dass die Maschine nicht in Betrieb gehen kann, solange nicht alle Elemente an ihrer Arbeitsposition sind, da der zentrale Schutzschalter im Normalfall unterbricht und nur dann geschlossen werden kann, wenn sich alle überwachte Komponenten, d.h. Türen und Maschinenteile sowie Schutzbügel in der Betriebsposition befinden.

In einer Ausführungsform ist der zentrale Schutzschalter an dem zentralen Schutzbügel angebracht. Dies ist von Vorteil, wenn das Betätigungselement des zentralen Schutzschalters an einer losen Abdeckung, die ausgewechselt werden kann, angebracht ist. Da in diesem Fall das kostengünstigere Element ausgewechselt wird, ist es kosteneffizienter, das teurere Schaltelement an den zentralen Schutzbügel anzubringen. In diesem Fall wird auch sichergestellt, dass die Maschine nur dann in Betrieb genommen werden kann, wenn die auswechselbare Abdeckung eingesetzt ist.

In einer Ausführungsform ist die Maschine ein Kaltleimaggregat, wobei das Kaltleimaggregat eine herausnehmbare Schutzmaske für einen Etikettenbehälter und mindestens eine Wartungstüre aufweisen kann. In diesem Fall kann das Betätigungselement für den zentralen Schutzschalter an der herausnehmbaren Schutzmaske angebracht werden. Da bei einem Wechsel der Etikettenform auch die Schutzmaske gewechselt werden muss, muss nicht der teure Schutzschalter mit ausgewechselt werden.

Alternativ dazu können der zentrale Schutzschalter auch an der herausnehmbaren Schutzmaske und das Betätigungselement für den zentralen Schutzschalter an dem zentralen Schutzbügel angebracht sein. Dies ist von Vorteil, wenn die Etikettenform nur selten oder nie gewechselt, da dann die Wartung des Schutzschalters, der ein zentrales Sicherheitselement ist, vereinfacht wird.

In einer Ausführungsform weist das Kaltleimaggregat eine Leimwalze, einen Antriebsmotor für die Leimwalze und einen Hebel zum Positionieren des Antriebsmotors in eine Wartungsposition und eine Betriebsposition auf. Zum Ausbauen der Leimwalze ist es vorteilhaft, den Motor in eine angehobene Position zu verstellen. Dies wird auf einfache Weise mit einem Hebel bewerkstelligt, mit dem der Motor über ein Gestänge höhenverstellt wird.

Diese Verstellung muss bei laufendem Aggregat unterbunden werden. Umgekehrt darf das Aggregat nur in Betrieb genommen werden können, wenn sich der Antriebsmotor für die Leimwalze in der unteren Stellung, d.h. in Betriebsposition, befindet. Dies wird erreicht, in dem der zentrale Schutzbügel so ausgebildet ist, dass der zentrale Schutzbügel den Hebel blockiert, wenn sich der Antriebsmotor in der Betriebsposition befindet, so dass der Antriebsmotor nicht in eine Wartungsposition gebracht werden kann, wenn der zentrale Schutzbügel geschlossen ist. Umgekehrt kann der zentrale Schutzbügel auch so ausgebildet sein, dass der Antriebsmotor den zentralen Schutzbügel blockiert, wenn sich der Antriebsmotor in der Wartungsposition befindet, so dass der zentrale Schutzbügel nicht geschlossen werden kann und damit der zentrale Schutzschalter keinen Kontakt auslösen kann.

Die oben genannte spezielle Aufgabe der vorliegenden Erfindung wird erfüllt mit einem Schutzmechanismus gemäß Patentanspruch 15. Insbesondere wird die spezielle Aufgabe gelöst durch einen Schutzmechanismus für ein Kaltleimaggregat mit einer Leimwalze, einem höhenverstellbaren Antriebsmotor für die Leimwalze, einem Hebel zum Anheben des Antriebsmotors in eine Wartungsposition, mindestens einer Türe als Wartungszugang und einer herausnehmbaren Schutzmaske für einen Etikettenbehälter, wobei der Schutzmechanismus zur Überwachung und Sicherung der Position der Türen, der Schutzmaske und des höhenverstellbaren Antriebsmotors für die Leimwalze vorgesehen ist und Folgendes umfasst:
Einen relativ zu den Türen, der Schutzmaske und dem höhenverstellbaren Antriebsmotor beweglich gelagerten zentralen Schutzbügel, der so ausgebildet ist, dass er nur dann geschlossen werden kann, wenn alle Türen geschlossen sind und sich der höhenverstellbare Antriebsmotor in einer Betriebsposition befindet, und durch einen zentralen Schutzschalter, der die Position des zentralen Schutzbügels und die Anwesenheit der Schutzmaske überwacht.

Dadurch können mehrere Schutztüren, eine Schutzmaske für Etikettenbehälter und der Leimwalzenantriebsmotor zentral mit einem Sicherheitsschalter bei geringem Hardware und Verdrahtungsaufwand überwacht und gesichert werden. Da der zentrale Schutzbügel nur mit einigem Kraftaufwand manuell verstellt werden kann, vergehen mehrere Sekunden bis eine Tür geöffnet werden kann, so dass genügend Zeit bleibt, die rotierenden und sich bewegenden Teile im Inneren des Aggregats nach Auslösen des Schutzschalters auf schonende und verschleißarme Weise zum Stillstand zu bringen.

Im Folgenden werden Ausführungsbeispiele, Weiterbildungen, Vorteile und Anwendungsmöglichkeiten der Erfindung anhand der beigefügten Figuren näher erläutert. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht. In den Figuren zeigt
Fig. 1 eine schematische dreidimensionale Ansicht eines Kaltleimaggregats gemäß der vorliegenden Erfindung in einem ersten Betriebszustand;
Fig. 2 das Aggregat von Fig. 1 in einem zweiten Betriebszustand mit geöffnetem zentralem Schutzbügel;
Fig. 3 das Aggregat von Fig. 1 in einem dritten Betriebszustand mit geöffneten Türen;
Fig. 4 das Aggregat von Fig. 1 in einem vierten Betriebszustand, bei dem der zentrale Schutzbügel von einer ersten Tür blockiert wird; und
Fig. 5 das Aggregat von Fig. 1 in einem fünften Betriebszustand, in dem der zentrale Schutzbügel von einer zweiten Tür blockiert wird.

Die vorliegende Erfindung erfolgte, um die Schutzmechanismen von Maschinen mit sich schnell bewegenden und rotierenden Komponenten zum Schutz vor Kollisionen mit Gegenständen oder Bedienungspersonal zu vereinfachen und damit zu verbessern und sicherer zu gestalten. ein zentraler Gedanke der vorliegenden Erfindung ist, verschließbare Wartungsöffnungen und Wartungspositionen von Maschinenkomponenten durch einen zentralen Schutzbügel in Kombination mit einem zentralen Schutzschalter zu überwachen und zu sichern. D.h. bei geschlossenem Schutzbügel ist es nicht möglich, die Wartungstüren zu öffnen oder die Position von Maschinenteilen zu verändern. Umgekehrt lässt sich der Schutzbügel nicht schließen und die Maschine in Betrieb nehmen , wenn Türen offen sind und Maschinenteile sich nicht in Betriebsposition befinden.

Dieser Gedanke wird in der folgenden Beschreibung beispielhaft anhand eines Kaltleimaggregats zum Aufbringen von Etiketten auf Flaschen und sonstige Behälter beschrieben. Dieser Gedanke der Erfindung beschränkt sich jedoch nicht auf die Anwendung auf ein Kaltleimaggregat, sondern kann auf jede Maschine mit rotierenden und sich bewegenden Maschinenteilen, die durch Wartungstüren abgesichert sind, angewendet werden.

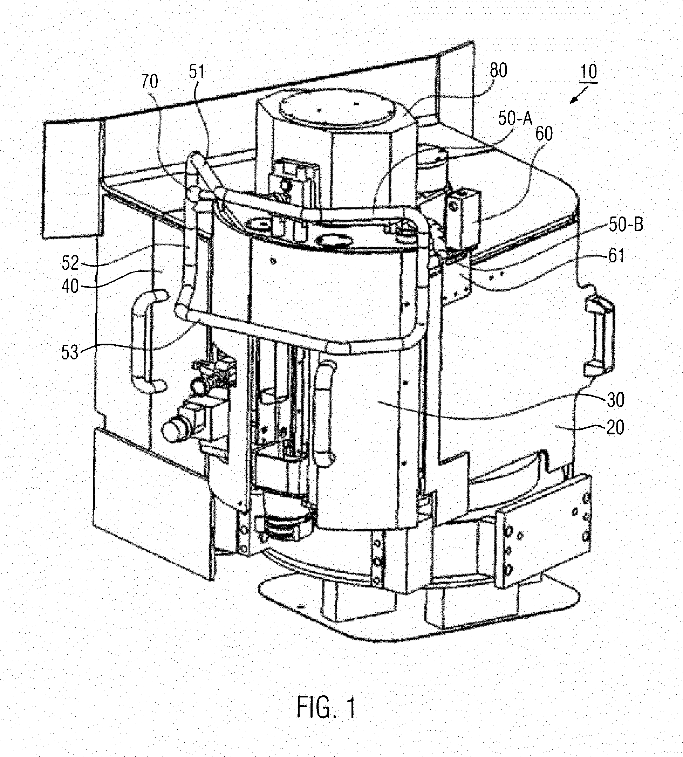

Fig. 1 zeigt eine schematische dreidimensionale Ansicht eines Kaltleimaggregats. In einem solchen Aggregat erhalten gummierte Beleimungspaletten über eine Leimwalze aus gehärtetem Stahl einen hauchdünnen Leimfilm. Die Paletten entnehmen die Etiketten aus einem Magazin, versehen sie mit einer Leimschicht und übergeben sie an einen Greiferzylinder. Dieser setzt sie präzise auf die Behälter, die auf einem Behältertisch vorbeilaufen. Dort werden die Etiketten durch Bürsten und Schwammrollen fixiert und geglättet. Die etikettierten Behälter werden von einem Auslaufstern erfasst und an das Transportband weitergegeben.

In Fig. 1 zu sehen ist das Etikettieraggregat bzw. das Kaltleimaggregat 10 mit mehreren Türen 30, 40, einem Antriebsmotor 80 für eine Leimwalze (nicht gezeigt), einer herausnehmbaren Schutzmaske 20 für einen Etikettenbehälter (nicht gezeigt), einem Hebel 70 zum Höhenverstellen des Antriebsmotors 80 für die Leimwalze, einen zentralen Schutzbügel 50-A und 50-B, einen zentralen Schutzschalter 60 und ein Betätigungselement 61 für den zentralen Schutzschalter 60.

Fig. 1 zeigt das Kaltleimaggregat 10 in einem betriebsbereiten Zustand (erster Betriebszustand), in dem alle Türen 30 und 40 geschlossen sind, die Schutzmaske 20 für den Etikettenbehälter eingesetzt ist, der Antriebsmotor 80 für die Leimwalze abgesenkt ist, der zentrale Schutzbügel 50-A geschlossen ist und das Betätigungselement 61 den zentralen Schutzschalter 60 aktiviert. In der Fig. 1 ist die Schutzmaske 20 nur schematisch dargestellt ohne Etikettenbehälter. In der Regel weist die Schutzmaske 20 jedoch Etikettenformat abhängige Öffnungen (nicht gezeigt) auf. d.h. bei einem Formatwechsel für die Etiketten muß auch die Schutzmaske 20 gewechselt werden. Aus diesem Grund ist das Betätigungselement 61 für den zentralen Schutzschalter 60 als kostengünstiger Teil der zentralen Schaltanordnung an der Schutzmaske befestigt und der zentrale Schutzschalter ist an dem zentralen Schutzbügel befestigt. Hinter der Schutzmaske 20 befinden sich die gummierten Beleimungspaletten (nicht sichtbar in Fig. 1), die die Etiketten aus dem Magazin aufnehmen, sie mit einer Leimschicht versehen und an einen Greiferzylinder (nicht sichtbar) weitergeben. Die Beleimungspaletten wurden vorher über eine Leimwalze (nicht sichtbar) mit einem dünnen Leimfilm versehen. Die Leimwalze befindet sich hinter der Wartungstüre 30. Hinter der Wartungstüre 40 kann sich beispielsweise der Greifer (nicht sichtbar) befinden. Der zentrale Schutzbügel besteht aus einem Element 50-A zum Blockieren und Freigeben der Türen 30 und 40 und des Motors 80 bzw. des Hebels 70 und aus einem Befestigungsabschnitt 50-B über den das Element 50-A zum Blockieren beweglich gelagert ist. An dem Befestigungsabschnitt 50-B ist der zentrale Schutzschalter 60 so angebracht, dass er über der Schutzmaske 20 liegt, so dass das Betätigungselement 61, das an der Schutzmaske 20 angebracht ist, in den zentralen Schutzschalter 60 eingreifen und einen Kontakt auslösen kann. Das Element zum Blockieren 50-A ist so ausgeformt, dass entsprechende Abschnitte des Elements zum Blockieren 50-A die Türen 30 und 40 bzw. den Hebel 70 blockieren. Beispielsweise blockiert der Abschnitt 51 des Elements zum Blockieren 50-A den Hebel 70, so dass Hebel 70 nicht den Motor 80 anheben kann, wenn der zentrale Schutzbügel geschlossen ist. Ebenso blockiert der Abschnitt 53 des Elements zum Blockieren 50-A die Türe 30 und der Abschnitt 52 des Elements zum Blockieren 50-A blockiert die Türe 40, so dass dies im Betrieb nicht geöffnet werden können.

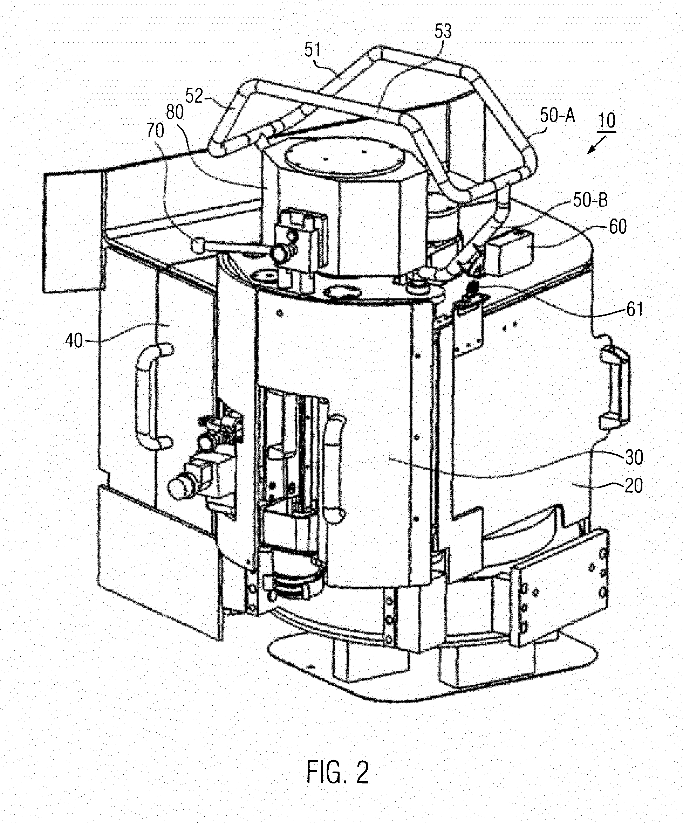

Fig. 2 zeigt das Kaltleimaggregat 10 in einem zweiten Betriebszustand, bei dem der zentrale Schutzbügel geöffnet wird und damit die Türen 30 und 40 sowie den Hebel 70 zum Anheben des Motors 80 freigibt. In der Fig. 2 sind die Elemente, die identisch zu den Elementen in Figur 1 sind, mit denselben Bezugszeichen bezeichnet. Zu deren Erläuterung wird auf Fig. 1 verwiesen. Beim Anheben des zentralen Schutzbügels in die geöffnete Position löst sich der zentrale Schutzschalter 60 von dem Betätigungselement 61 und gibt damit auch die Schutzmaske 20 frei. Damit wird der Kontakt in dem zentralen Schutzschalter 60 unterbrochen und die sich drehenden Teile im Inneren des Kaltleimaggregats werden schonend abgebremst. Da die Betätigung des zentralen Schutzbügel 50-A und 50-B ein bis zwei Sekunden in Anspruch nimmt, ist genügend Zeit für ein schonendes Abbremsen der beweglichen Teile vorhanden, so dass die Türen 30 und 40 ohne Verletzungsgefahr sicher geöffnet werden können und der Motor 80 ohne Beschädigung des Aggregats angehoben werden kann. Durch die Befestigung des Betätigungselements 61 an der Schutzmaske 20 ist sichergestellt, dass bei einem Formatwechsel der Etiketten das Einsetzen der Schutzmaske 20 nicht vergessen wird.

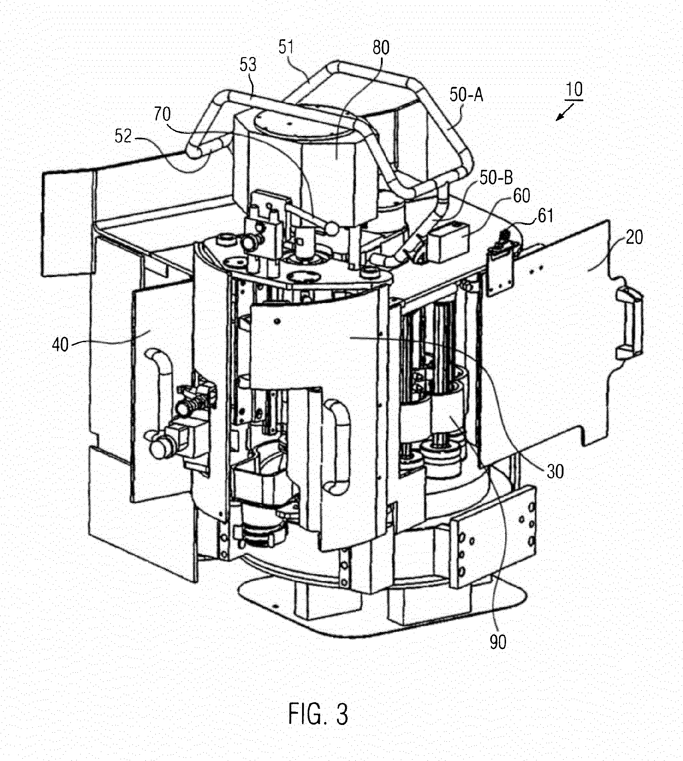

Fig. 3 zeigt das Kaltleimaggregat 10 aus der Fig. 1 in einem dritten Betriebszustand, bei dem die Türen 30 und 40 geöffnet sind, die Schutzmaske 20 entnommen ist und der Motor 80 durch Umlegen des Hebels 70 angehoben ist. In der Fig. 3 sind wieder die Elemente, die identisch zu den Elementen in Figur 1 sind, mit denselben Bezugszeichen bezeichnet. Zu deren Erläuterung wird auf Fig. 1 verwiesen. Der dritte Betriebszustand der Fig. 3 wird nach dem Betriebszustand 2 aus der Fig. 2 erreicht. d.h. zuerst wird der zentrale Schutzbügel 50-A und 50-B in die offene Position gebracht und danach werden die Türen 30 und 40 geöffnet, der Motor 80 angehoben und die Schutzmaske 20 entfernt. Nach der Entfernung der Schutzmaske 20 werden die Beleimungspaletten 90 sichtbar. Da der Kontakt des zentralen Schutzschalters unterbrochen wird, wenn der zentrale Schutzbügel 50-A und 50-B geöffnet wird, sind die sich drehenden Komponenten wie beispielsweise die Beleimungspaletten 90 und die Leimwalze (nicht gezeigt) bereits zum Stillstand gekommen und eine sichere Wartung mit geringem Verletzungsrisiko wird ermöglicht. Fig. 3 zeigt auch, dass bei angehobenem Motor 80 der zentrale Schutzbügel 50-A und 50-B nicht geschlossen werden kann, da der Motor 80 den Abschnitt 53 des Elements zum Blockieren 50-A blockiert, so dass der zentrale Schutzschalter 60 im Fall einer eingesetzten Maske 20 und bei angehobenem Motor 80 nicht betätigt werden kann. Weiterhin ist der Fig. 3 zu entnehmen, dass der zentrale Schutzschalter 60 bei entnommener Schutzmaske 20 keinen Kontakt auslösen kann, selbst wenn der Motor 80 nicht angehoben ist und sich in Arbeitsposition befinden würde, da kein Betätigungselement 61 in den zentralen Schutzschalter 60 eingreifen kann, um den Kontakt auszulösen.

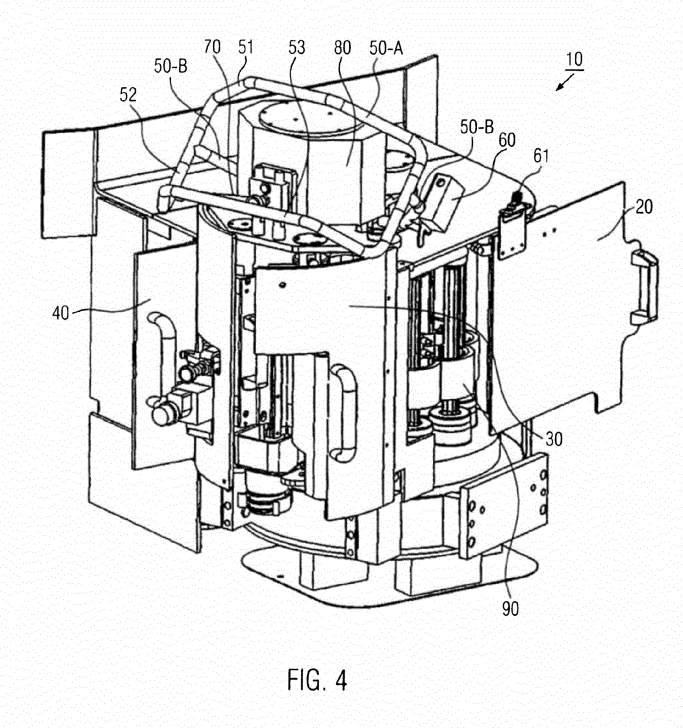

Fig. 4 zeigt das Kaltleimaggregat 10 aus der Fig. 1 in einem vierten Betriebszustand, bei dem versucht wird, den zentralen Schutzbügel 50-A und 50-B bei abgesenktem Motor 80 aber geöffneten Türen 30 und 40 zu schließen. In diesem Fall blockiert die Tür 30 den Abschnitt 54 des Elements zum Blockieren 50-A des zentralen Schutzbügels, so dass der zentrale Schutzbügel nicht geschlossen werden kann und der zentrale Schutzschalter 60 keinen Kontakt herstellen kann, selbst wenn die Schutzmaske 20 eingesetzt ist und das Betätigungselement 61 in den zentralen Schutzschalter 60 eingreifen könnte.

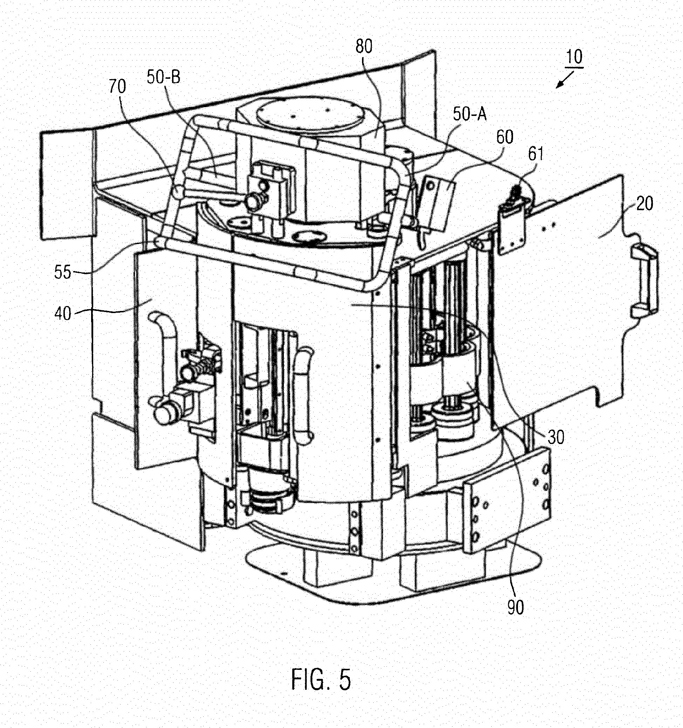

Fig. 5 zeigt das Kaltleimaggregat 10 aus Fig. 1 in einem fünften Betriebszustand. Wie der Fig. 5 zu entnehmen ist, ist das Element zum Blockieren 50-A so ausgebildet, dass, wenn die Tür 30 geschlossen ist, der Schutzbügel über einen Abschnitt 55 an dem Element zum Blockieren 50-A blockiert wird, so dass der zentrale Schutzbügel nicht geschlossen werden kann. Somit ist der zentrale Schutzbügel so ausgebildet, dass er nur in die geschlossene Position gebracht werden kann, wenn alle Türen 30 und 40 geschlossen sind und wenn der Motor 80 abgesenkt in einer Betriebsposition ist. Weiterhin kann ein Kontakt in dem zentralen Schutzschalter 60 nur ausgelöst werden, wenn die Position des zentralen Schutzbügels geschlossen ist und wenn die Schutzmaske 20 eingesetzt ist. Somit ist es nicht möglich, das Kaltleimaggregat im offenen Zustand zu betreiben und Sicherheit kann gewährleistet werden.

Die Fig. 1, 2, 3, 4 und 5 zeigen eine Abfolge von Betriebszuständen, die nacheinander ablaufen. Fig. 1 zeigt einen betriebsbereiten Zustand (erster Betriebszustand). Fig. 2 zeigt einen zweiten Betriebszustand in dem der zentrale Schutzbügel 50-A und 50-B geöffnet wurde und der Kontakt im zentralen Schutzschalter 60 unterbrochen wurde, so dass die sich bewegenden Maschinenteile im Aggregat zum Stillstand gebracht werden. Fig. 3 zeigt einen Betriebszustand in dem alle Türen 30 und 40 geöffnet sind, der Motor 80 angehoben ist und die Schutzmaske 20 abgenommen ist. Fig. 4 zeigt einen vierten Betriebszustand, in dem z.B. nach einer Wartung der Motor 80 wieder abgesenkt wurde und versucht wird, den zentralen Schutzbügel zu schließen, der aber von der Tür 30 blockiert wird und nicht geschlossen werden kann (noch nicht betriebsbereit). Fig. 5 zeigt einen fünften Betriebszustand zu einem etwas späteren Zeitpunkt, bei dem die Tür 30 geschlossen wurde, die Tür 40 aber noch geöffnet ist. Wird die Tür 40 geschlossen und die Schutzmaske 20 eingesetzt, kann der zentrale Schutzbügel 50-A und 50-B geschlossen werden, so dass das Betätigungselement 61 in den zentralen Schutzschalter 60 eingreifen kann und ein Kontakt ausgelöst wird. In diesem Fall ist der erste Betriebszustand gemäß Fig. 1 wieder hergestellt.

## Patentansprüche

1. Etikettiervorrichtung mit einem Schutzmechanismus zur Überwachung und Sicherung der Position von Türen (30,40) und positionierbaren Maschinenteilen (80), die Etiketiervorrichtung aufweisend einen relativ zu den Türen (30,40) und den positionierbaren Maschinenteilen (80) beweglich gelagerten zentralen Schutzbügel (50-A, 50-B), der so ausgebildet ist, dass er nur dann geschlossen werden kann, wenn alle Türen (30 ,40) geschlossen sind und sich alle Maschinenteile (80) in einer Betriebsposition befinden, und einen zentralen Schutzschalter (60), der die Position des zentralen Schutzbügels (50-A, 50-B) überwacht.

2. Etikettiervorrichtung nach Anspruch 1, wobei der zentrale Schutzbügel (50-A, 50-B) so ausgeführt ist, dass er zwei Endlagen für die Maschinenzustände offen und geschlossen einnehmen kann.

3. Etikettiervorrichtung nach Anspruch 2, wobei der zentrale Schutzbügel (50-A, 50-B) mit einer Gasfeder in den beiden Endlagen fixiert wird.

4. Etikettiervorrichtung nach Anspruch 2 oder 3, wobei der zentrale Schutzbügel (50-A, 50-B) so ausgeführt ist, dass er bei einer offenen Tür (30, 40) blockiert wird und nicht in die geschlossene Endlage gebracht werden kann.

5. Etikettiervorrichtung nach einem der Ansprüche 2 - 4, wobei der zentrale Schutzbügel (50-A, 50-B) so ausgeführt ist, dass die Türen blockiert sind, wenn sich der zentrale Schutzbügel (50-A, 50-B) in der geschlossenen Endlage befindet.

6. Etikettiervorrichtung nach einem der Ansprüche 2-5, wobei der zentrale Schutzschalter (60) so ausgebildet ist, dass er den Betrieb der Etikettiervorrichtung zulässt, wenn er von einem Betätigungselement (61) für den zentralen Schutzschalter (60) betätigt wird, und
dass er den Maschinenbetrieb bei Nichtbetätigung blockiert.

7. Etikettiervorrichtung nach einem der Ansprüche 1 - 6, wobei der zentralen Schutzschalter (60) an dem zentralen Schutzbügel (50-A, 50-B) angebracht ist.

8. Etikettiervorrichtung nach einem der Ansprüche 1 - 7, wobei die Etikettiervorrichtung ein Kaltleimaggregat (10) beinhaltet.

9. Etikettiervorrichtung nach einem der Ansprüche 1 - 8, wobei das Kaltleimaggregat (10) eine herausnehmbare Schutzmaske (20) für einen Etikettenbehälter und mindestens eine Wartungstüre (30, 40) aufweist.

10. Etikettiervorrichtung nach Anspruch 9, wobei das Betätigungselement (61) für den zentralen Schutzschalter (60) an der herausnehmbaren Schutzmaske (20) angebracht ist.

11. Etikettiervorrichtung nach Anspruch 9, wobei der zentrale Schutzschalter (60) an der herausnehmbaren Schutzmaske (20) und das Betätigungselement (61) für den zentralen Schutzschalter (60) an dem zentralen Schutzbügel (50-A, 50-B) angebracht ist.

12. Etikettiervorrichtung nach einem der Ansprüche 8 bis 11, wobei das Kaltleimaggregat (10) eine Leimwalze, einen Antriebsmotor (80) für die Leimwalze und einen Hebel (70) zum Positionieren des Antriebsmotors (80) in eine Wartungsposition und eine Betriebsposition aufweist.

13. Etikettiervorrichtung nach Anspruch 12, wobei der zentrale Schutzbügel (50-A, 50-B) so ausgebildet ist, dass der zentrale Schutzbügel (50-A, 50-B) den Hebel (70) blockiert, wenn sich der Antriebsmotors (80) in der Betriebsposition befindet, so dass der Antriebsmotors (80) nicht in eine Wartungsposition gebracht werden kann.

14. Etikettiervorrichtung nach Anspruch 12 oder 13, wobei der zentrale Schutzbügel (50-A, 50-B) so ausgebildet ist, dass der Antriebsmotor (80) den zentralen Schutzbügel (50-A, 50-B) blockiert, wenn sich der Antriebsmotor (80) in der Wartungsposition befindet, so dass der zentrale Schutzbügel (50-A, 50-B) nicht geschlossen werden kann.

15. Kaltleimaggregat (10) der Etikettiervorrichtung gemäss Anspruch 1 mit einer Leimwalze, einem höhenverstellbaren Antriebsmotor (80) für die Leimwalze, einem Hebel (70) zum Anheben des Antriebsmotors (80) in eine Wartungsposition, mindestens einer Türe als Wartungszugang und einer herausnehmbaren Schutzmaske (20) für einen Etikettenbehälter, wobei das Kaltleimaggregat (10) einen Schutzmechanismus zur Überwachung und Sicherung der Position der Türen (30 ,40), der Schutzmaske (20) und des höhenverstellbaren Antriebsmotors (80) für die Leimwalze einschließt, der folgendes umfasst:
einen relativ zu den Türen (30 ,40), der Schutzmaske (20) und dem höhenverstellbaren Antriebsmotor (80) beweglich gelagerten zentralen Schutzbügel (50-A, 50-B), der so ausgebildet ist, dass er nur dann geschlossen werden kann, wenn alle Türen (30 ,40) geschlossen sind und sich der höhenverstellbare Antriebsmotor (80) in einer Betriebsposition befindet, und durch
einen zentralen Schutzschalter (60), der die Position des zentralen Schutzbügels (50-A, 50-B) und die Anwesenheit der Schutzmaske (20) überwacht.

## Claims

1. A labeling machine with a protection mechanism for monitoring and securing the position of doors (30, 40) and positionable machine parts (80),
the labeling machine comprising
a central safety bracket (50-A, 50-B), which is movably supported relative to the doors (30, 40) and the positionable machine parts (80) and configured such that it can only be closed when all the doors (30, 40) are closed and all the machine parts (80) are at an operating position, and
a central safety switch (60), which monitors the position of the central safety bracket (50-A, 50-B).

2. The labeling machine according to claim 1, wherein the central safety bracket (50-A, 50-B) is configured such that it is able to assume two end positions for the machine conditions open and closed.

3. The labeling machine according to claim 2, wherein the central safety bracket (50-A, 50-B) is fixed at the two end positions by means of a gas spring.

4. The labeling machine according to claim 2 or 3, wherein the central safety bracket (50-A, 50-B) is configured such that, with the door (30, 40) open, it is blocked and cannot be moved to the closed end position.

5. The labeling machine according to one of the claims 2 to 4, wherein the central safety bracket (50-A, 50-B) is configured such that the doors are blocked, when the central safety bracket (50-A, 50-B) is at the closed end position.

6. The labeling machine according to one of the claims 2 to 5, wherein the central safety switch (60) is configured such that, when actuated by an operating element (61) for the central safety switch (60), it allows the labeling machine to operate, and
when not actuated, it blocks operation of the machine.

7. The labeling machine according to one of the claims 1 to 6, wherein the central safety switch (60) is attached to the central safety bracket (50-A, 50-B).

8. The labeling machine according to one of the claims 1 to 7, wherein the labeling machine includes a cold-glue unit (10).

9. The labeling machine according to one of the claims 1 to 8, wherein the cold-glue unit (10) comprises a removable protective mask (20) for a label container and at least one maintenance door (30, 40).

10. The labeling machine according to claim 9, wherein the operating element (61) for the central safety switch (60) is attached to the removable protective mask (20).

11. The labeling machine according to claim 9, wherein the central safety switch (60) is attached to the removable protective mask (20) and the operating element (61) for the central safety switch (60) is attached to the central safety bracket (50-A, 50-B).

12. The labeling machine according to one of the claims 8 to 11, wherein the cold-glue unit (10) comprises a gluing roller, a drive motor (80) for the gluing roller and a lever (70) for positioning the drive motor (80) at a maintenance position and at an operating position.

13. The labeling machine according to claim 12, wherein the central safety bracket (50-A, 50-B) is configured such that the central safety bracket (50-A, 50-B) blocks the lever (70) when the drive motor (80) is at the operating position, so that the drive motor (80) cannot be moved to a maintenance position.

14. The labeling machine according to claim 12 or 13, wherein the central safety bracket (50-A, 50-B) is configured such that the drive motor (80) blocks the central safety bracket (50-A, 50-B) when the drive motor (80) is at the maintenance position, so that the central safety bracket (50-A, 50-B) cannot be closed.

15. A cold-glue unit (10) of the labeling machine according to claim 1 comprising a gluing roller, a vertically adjustable drive motor (80) for the gluing roller, a lever (70) for raising the drive motor (80) to a maintenance position, at least one door as a maintenance access and a removable protective mask (20) for a label container, wherein the cold-glue unit (10) comprises a protection mechanism for monitoring and securing the position of the doors (30, 40), the protective mask (20) and the vertically adjustable drive motor (80) for the gluing roller, the protection mechanism comprising the following components:
a central safety bracket (50-A, 50-B), which is movably supported relative to the doors (30, 40), the protective mask (20) and the vertically adjustable drive motor (80) and configured such that it can only be closed when all the doors (30, 40) are closed and the vertically adjustable drive motor (80) is at an operating position, and
a central safety switch (60), which monitors the position of the central safety bracket (50-A, 50-B) and the presence of the protective mask (20).

## Revendications

1. Dispositif d'étiquetage comprenant un mécanisme de protection pour la surveillance et la sécurisation de la position de portes (30, 40) et de pièces de machine (80) pouvant être positionnées, le dispositif d'étiquetage présentant
un étrier de protection central (50-A, 50-B), qui est monté mobile par rapport aux portes (30, 40) et aux pièces de machine (80) pouvant être positionnées, et qui est conçu de manière à ne pouvoir être fermé que lorsque toutes les portes (30, 40) sont fermées et que toutes les pièces de machine (8) se trouvent dans une position de fonctionnement, et
un commutateur de protection central (60), qui surveille la position de l'étrier de protection central (50-A, 50-B) .

2. Dispositif d'étiquetage selon la revendication 1, dans lequel l'étrier de protection central (50-A, 50-B) est réalisé de manière à pouvoir prendre deux positions extrêmes pour les états de machine ouvert et fermé.

3. Dispositif d'étiquetage selon la revendication 2, dans lequel l'étrier de protection central (50-A, 50-B) est fixé à l'aide d'un ressort à gaz dans les deux positions extrêmes.

4. Dispositif d'étiquetage selon la revendication 2 ou la revendication 3, dans lequel l'étrier de protection central (50-A, 50-B) est réalisé de manière telle, que dans le cas d'une porte (30, 40) ouverte, il soit bloqué et ne puisse pas être amené dans la position extrême fermée.

5. Dispositif d'étiquetage selon l'une des revendications 2-4, dans lequel l'étrier de protection central (50-A, 50-B) est réalisé de manière telle, que les portes soient bloquées lorsque l'étrier de protection central (50-A, 50-B) se trouve dans la position extrême fermée.

6. Dispositif d'étiquetage selon l'une des revendications 2-5, dans lequel le commutateur de protection central (60) est réalisé de manière à autoriser le fonctionnement du dispositif d'étiquetage lorsqu'il est actionné par un élément d'actionnement (61) pour le commutateur de protection central (60), et de manière à bloquer le fonctionnement de la machine en cas de non actionnement.

7. Dispositif d'étiquetage selon l'une des revendications 1-6, dans lequel le commutateur de protection central (60) est placé sur l'étrier de protection central (50-A, 50-B).

8. Dispositif d'étiquetage selon l'une des revendications 1-7, dans lequel le dispositif d'étiquetage renferme un groupe d'encollage à froid (10) .

9. Dispositif d'étiquetage selon l'une des revendications 1-8, dans lequel le groupe d'encollage à froid (10) comporte un masque de protection extractible (20) pour un magasin d'étiquettes et au moins une porte d'entretien (30, 40).

10. Dispositif d'étiquetage selon la revendication 9, dans lequel l'élément d'actionnement (61) pour le commutateur de protection central (60), est placé sur le masque de protection extractible (20).

11. Dispositif d'étiquetage selon la revendication 9, dans lequel le commutateur de protection central (60) est placé sur le masque de protection extractible (20), et l'élément d'actionnement (61) pour le commutateur de protection central (60) est placé sur l'étrier de protection central (50-A, 50-B).

12. Dispositif d'étiquetage selon l'une des revendications 8 à 11, dans lequel le groupe d'encollage à froid (10) comprend un rouleau d'encollage, un moteur d'entraînement (80) pour le rouleau d'encollage, et un levier (70) pour le positionnement du moteur d'entraînement (80) dans une position d'entretien et une position de fonctionnement.

13. Dispositif d'étiquetage selon la revendication 12, dans lequel l'étrier de protection central (50-A, 50-B) est conçu de manière telle, que l'étrier de protection central (50-A, 50-B) bloque le levier (70) lorsque le moteur d'entraînement (80) se trouve dans la position de fonctionnement, de sorte que le moteur d'entraînement (80) ne peut pas être amené dans une position d'entretien.

14. Dispositif d'étiquetage selon la revendication 12 ou la revendication 13, dans lequel l'étrier de protection central (50-A, 50-B) est conçu de manière telle, que le moteur d'entraînement (80) bloque l'étrier de protection central (50-A, 50-B) lorsque le moteur d'entraînement (80) se trouve dans la position d'entretien, de sorte que l'étrier de protection central (50-A, 50-B) ne peut pas être fermé.

15. Groupe d'encollage à froid (10) du dispositif d'étiquetage selon la revendication 1, comprenant un rouleau d'encollage, un moteur d'entraînement (8) déplaçable en hauteur pour le rouleau d'encollage, un levier (70) pour soulever le moteur d'entraînement (80) dans une position d'entretien, au moins une porte en tant qu'accès d'entretien et un masque de protection (20) pour un magasin d'étiquettes, le groupe d'encollage à froid (10) intégrant un mécanisme de protection pour la surveillance et la sécurisation de la position des portes (30, 40), du masque de protection (20) et du moteur d'entraînement (80) déplaçable en hauteur pour le rouleau d'encollage, qui comprend les éléments suivants :
un étrier de protection central (50-A, 50-B), qui est monté mobile par rapport aux portes (30, 40), au masque de protection (20) et au moteur d'entraînement (80) déplaçable en hauteur, et qui est conçu de manière à ne pouvoir être fermé que lorsque toutes les portes (30, 40) sont fermées et que le moteur d'entraînement (80) se trouve dans une position de fonctionnement, et
un commutateur de protection central (60), qui surveille la position de l'étrier de protection central (50-A, 50-B) et la présence du masque de protection (20).
